(19) Europäisches Patentamt
European Patent Office
Office européen des brevets

(11) Numéro de publication: **0 007 826**
**B1**

(12) **FASCICULE DE BREVET EUROPEEN**

(45) Date de publication du fascicule de brevet: **25.11.81**

(21) Numéro de dépôt: **79400441.6**

(22) Date de dépôt: **29.06.79**

(51) Int. Cl.³: **G 01 C 19/64,**
H 01 S 3/083

(54) **Gyromètre interférométrique à fibre optique.**

(30) Priorité: **10.07.78 FR 7820540**

(43) Date de publication de la demande:
**06.02.80 Bulletin 80/3**

(45) Mention de la délivrance du brevet:
**25.11.81 Bulletin 81/47**

(84) Etats Contractants Désignés:
**DE GB NL SE**

(56) Documents cités:
**DE - A - 2 538 287**
**FR - A - 2 023 465**
**US - A - 3 512 890**

(73) Titulaire: **THOMSON-CSF**
**173, Boulevard Haussmann**
**F-75360 Paris Cedex 08 (FR)**

(72) Inventeur: **Pircher, Georges**
**"THOMSON-CSF" - SCPI 173, Bld. Haussmann**
**F-7530 Paris Cédex 08 (FR)**

(74) Mandataire: **Turlèque, Clotilde et al,**
**"THOMSON-CSF" - SCPI 173, bld Haussmann**
**F-75360 Paris Cedex 08 (FR)**

**EP 0 007 826 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Gyromètre interférométrique à fibre optique

L'invention se rapporte à la mesure de vitesse angulaire et plus particulièrement à un gyromètre interférométrique à fibre utilisant l'effet Sagnac, la vitesse angulaire étant déterminée par mesure interférométrique.

On connait des gyromètres interférométriques utilisant une fibre optique enroulée en hélice parcourue simultanément par deux ondes lumineuses se propageant dans la fibre en sens contraires. Lorsque l'ensemble est en rotation autour de l'axe de l'hélice, l'une des ondes se propage dans le sens de la rotation et l'autre en sens contraire. Les deux ondes émergeant des extrémités de la fibre sont déphasées et ce déphasage est proportionnel à la vitesse de rotation. Ce déphasage est mis en évidence en recombinant les ondes émergentes par interférence. Le niveau du signal détecté est lié au déphasage entre les deux ondes et suit une loi en $Cos^2$. Pour obtenir approximativement la proportionnalité, aux faibles vitesses, entre le niveau du signal détecté et le déphasage, et pour changer le sens du déphasage en même temps que le sens de la vitesse, un déphasage égal à

$$\frac{\pi}{2}$$

est introduit entre les deux ondes de façon que, à vitesse nulle, le niveau du signal détecté soit un niveau moyen qui augmente ou diminue suivant le sens de la rotation.

Un tel dispositif ne permet pas de s'affranchir des dérives inhérentes à l'appareillage : dérive de l'amplificateur, dérive de la puissance de sortie du laser... Pour diminuer la vitesse inférieure mesurable et se rapprocher de la vitesse limite inférieure susceptible d'être détectée, liée seulement au bruit quantique photonique du détecteur, il est possible d'introduire une modulation suivie d'une démodulation synchrone permettant de s'affranchir d'une partie du bruit du système.

L'invention a donc pour objet un gyromètre interférométrique à fibre optique comportant une source laser émettant un rayonnement monochromatique, une fibre optique enroulée en hélice autour de l'axe de rotation du gyromètre, des moyens de séparation et de recombinaison du rayonnement destinés à diriger vers les deux extrémités de la fibre deux ondes circulant dans la fibre en sens contraires et à recombiner les deux ondes émergeant de la fibre, un détecteur des ondes recombinés et des moyens déphaseurs placés sur le trajet du rayonnement entre ledit détecteur et lesdits moyens de séparation et de recombinaison de façon à introduire entre les deux ondes un déphasage fixe égal à

$$\frac{\pi}{2}$$

avant détection; principalement caractérisé en ce qu'il comporte en outre des moyens de commutation commandés par un signal alternatif fourni par un modulateur agissant sur les deux ondes pour inverser alternativement leur sens de parcours de la fibre par rapport au sens de rotation, et un démodulateur synchrone recevant le signal de sortie du détecteur et un signal synchrone du signal de commande appliqué aux moyens de commutation.

L'invention sera mieux comprise et d'autres caractéristiques apparaîtront à l'aide de la description qui suit, en référence aux figures annexées.

La figure 1 est un schéma du gyromètre interférométrique à fibre selon l'invention;

la figure 2 représente une courbe donnant les variations du signal de sortie du détecteur en fonction du déphasage entre les deux ondes et donc de la vitesse de rotation;

la figure 3 représente un schéma de l'inverseur de polarisation à effet Pockels utilisé à titre d'exemple dans le gyrométre représenté sur la figure 1;

la figure 4 représente un diagramme vectoriel de Fresnel illustrant le fonctionnement du gyromètre selon l'invention.

De manière classique, un gyromètre interférométrique à fibre optique comporte une source laser, des moyens de séparation et de mélange du rayonnement permettant de diriger simultanément et par moitiés le rayonnement monochromatique issu de la source vers les deux extrémités d'une fibre optique de grande longueur enroulée en spirale, puis de mélanger les ondes émergeant des deux extrémités de la fibre optique, après que celles-ci aient parcouru la fibre. Lorsque la fibre est en rotation à la vitesse $\Omega$ à mesurer, les ondes émergeant des extrémités de la fibre présentent un déphasage $\Delta\Phi$ dû à la rotation

$$\Delta\Phi \times \frac{8\pi}{C\lambda} sN\Omega,$$

où C est la vitesse de la lumière, $\lambda$ la longueur d'onde du rayonnement, s la surface d'une spire de la fibre et N le nombre de spires. Un détecteur quadratique recueille un signal $V_D = A\,Cos^2\,\Delta\Phi$ où A est l'amplitude de ce signal. Pour des vitesses faibles, $\Delta\Phi$ tend vers O et l'intensité est voisine du maximum. Pour obtenir une meilleure détection aux vitesses faibles comme indiqué ci-dessus, les deux ondes sont déphasées d'un déphasage fixe tel que, pour $\Omega = O$, le niveau détecté corresponde au point d'inflexion de la courbe de telle

manière que les variations soient aussi grandes que possible. Ce résultat est obtenu en déphasant les deux ondes de

$$\frac{\pi}{2}.$$

L'intensité alors obtenue est représentée en fonction du déphasage variable $\Delta\,\Phi$ dépendant de la vitesse sur la figure 2. Le point A, où le signal détecté est $V_{DO}$, correspond à $\Omega = O(\Delta\,\Phi = O)$.

Pour s'affranchir, au moins en partie, du bruit introduit par le système, le gyromètre selon l'invention comporte des moyens de commutation assurant la propagation d'une première onde alternativement dans le sens de la rotation et dans le sens contraire de la rotation, la seconde onde se propageant alternativement dans le sens contraire de la rotation et dans le sens de la rotation. Le déphasage entre ces deux ondes passe donc, au rythme de la commutation, de $+\,\Delta\,\Phi$ à $-\,\Delta\,\Phi$ et, le déphasage de

$$\frac{\pi}{2}$$

étant créé entre ces deux ondes toujours dans le même sens, les niveaux mesurés sur le détecteur correspondent successivement à $V_{D1}$ et $V_{D2}$. Un démodulateur synchrone recevant le signal de sortie du détecteur et un signal synchrone du signal de commande appliqué aux moyens de commutation fournit alors un signal directement lié à la vitesse de rotation.

Un mode de réalisation du gyromètre interférométrique à fibre optique suivant l'invention est représenté sur la figure 1. Il comporte une source laser 1 émettant un rayonnement monochromatique à polarisation rectiligne $\vec{Pa}$. Le système a un axe Oy dirigé suivant $\vec{Pa}$, un axe Oz qui est l'axe de propagation du rayonnement, Ox étant l'axe orthogonal à Oy dans le plan de polarisation. Une lame séparatrice 2 est placée sur le trajet du rayonnement de façon à séparer le faisceau de retour du faisceau issu du laser. Un inverseur électro-optique à effet Pockels est placé sur le trajet du rayonnement. Cet inverseur utilise un cristal KDP deuteré, c'est-à-dire KD*P (dans lequel une molécule d'hydrogène du potassium dihydrogéné est remplacée par une molécule de Deutérium). Un schéma de l'inverseur est représenté sur la figure 3 où l'on a représenté les axes x, y et z du système optique de la figure 1. La taille du cristal est telle que l'axe optique Oc du cristal est suivant l'épaisseur du cristal, les axes mécaniques Oa et Ob, non différenciés puisque le cristal est uniaxe, étant dans le plan des grandes faces. Ce cristal est utilisé, dans le système optique de la figure 1, de telle manière que son axe optique Oc soit dirigé suivant Oy. Des électrodes 11 et 12 sont prévues sur les grandes faces du cristal de telle manière que le champ soit appliqué suivant la direction Oy. Cette configuration de champ, transversal par rapport à l'axe optique du rayonnement, est intéressante car les électrodes ne sont pas situées sur le trajet du rayonnement.

Une vibration incidente, de polarisation rectiligne à l'entrée du cristal n'émergera avec une polarisation rectiligne, que si ses composantes suivant Ox et Oy, qui se propagent à des vitesses différentes, sont en phase à la sortie. Si la longueur du cristal est convenablement choisie et que cette condition est réalisée, tant en présence de champ qu'en absence de champ, l'inverseur de polarisation fonctionne de telle manière qu'en absence de champ, les polarisation se conservent et en présence de champ une polarisation $\vec{E}$ ayant des composantes $E_x$ et $E_y$ suivant les axes X et Y se transforme en $\vec{E'}$, de composantes $E'_x = E_x$ et $E'_y = -E_y$. Une polarisation incidente $\vec{Pa}$ dirigée suivant l'axe optique décomposable en deux composantes $P_X$ et $P_Y$ sur des axes XY à 45° des axes x et y se transformera donc en présence de champ en $-\vec{Pa}$ décomposable en deux composantes $P'_Y$ transformée de $P_X$ et $P'_X$ transformée de $P_Y$.

Cet inverseur électro-optique 3 est commandé par un modulateur 4 fournissant des impulsions de fréquence égale à plusieurs centaines de kilocycles par seconde et de quelques centaines de Volts. Cet inverseur 3 est suivi, sur le chemin optique d'une lame semi-transparente 5 divisant le rayonnement incident en deux moitiés, l'une dirigée vers un polariseur 7 dont la direction de polarisation est par exemple la direction X et l'autre vers un second polariseur 8 dont la direction de polarisation est la direction orthogonale à la direction du polariseur 7, c'est-à-dire par exemple la direction Y. Les rayonnements émergeant de ces deux polariseurs seront donc les parties du rayonnement incident sur ces polariseurs polarisées respectivement suivant les directions X et Y. Les symboles

(Px) et (Py)

utilisés sur la figure 1, représentent les polarisations suivant les directions X et Y (sans qu'il soit distingué suivant leur sens). Les flèches indiquent le sens de propagation. Ces deux ondes parcourent la fibre optique monomode enroulée 6 respectivement dans un sens et dans l'autre. Au cours de ce trajet, la polarisation subit des effets divers dûs en particulier aux réflexions sur le dioptre coeur-gaine et après le trajet dans la fibre des polarisations de ces deux ondes ne sont plus déterminables. Cependant, le passage de ces deux ondes dans les polariseurs, respectivement 8 et 7, pour les ondes initialement polarisées suivant X et Y sélectionne les parties du rayonnement correspondant aux directions de polarisation des

polariseurs, respectivement Y et X.

Ces deux ondes, émergeant des polariseurs après avoir parcouru la fibre, sont déphasées de $\Delta \Phi = 2d \Phi$, l'une ayant subi un déphasage d $\Phi$ et l'autre $-d \Phi$. Une fraction de l'une est réfléchie par la lame 5 et une fraction de l'autre est transmise par cette même lame, de telle manière que à l'entrée de l'inverseur électro-optique 3, une onde résultante se présente. Si l'inverseur est dans l'état non excité, les composantes de polarisation rectilignes suivant X et Y sont conservées, de la même manière que pour le trajet aller, et si l'inverseur est dans l'état excité, ces composantes de polarisation sont inversées. Le rayonnement retour émergeant de l'inverseur est réfléchi par la lame semi-réfléchissante 2 en direction d'une lame quart d'onde 9 qui introduit entre les ondes correspondant aux deux directions de polarisation précédentes X et Y un déphasage de

$$\frac{\pi}{2}.$$

Le rayonnement émergeant de la lame quart d'onde 9 est détecté par un détecteur quadratique 10 qui transmet le signal détecté $V_D$ à un amplificateur 30. Le signal issu de l'amplificateur 30 est démodulé par un démodulateur synchrone 40 recevant sur sa seconde entrée un signal synchrone du signal de sortie du modulateur 4 appliqué à l'inverseur électro-optique 3.

Lorsque l'ensemble est en rotation autour de l'axe de l'hélice formée par la fibre monomode enroulée, à la vitesse $\Omega$, l'onde qui se propage dans le sens de la rotation émerge de la fibre en retard par rapport à la même onde lorsque le gyromètre ne tourne pas, ce qui correspond à un déphasage $-d \Phi$; l'onde qui se propage dans le sens contraire de la rotation émerge de la fibre en avance par rapport à la même onde lorsque l'ensemble est fixe, ce qui correspond à un déphasage $+d \Phi$. Le déphasage entre les deux ondes est donc égal à $\Delta \Phi = 2d \Phi$ et change de signe lors de chaque inversion de polarisation, chacune étant réfléchie vers la lame quart d'onde avec une polarisation de sens invariable quel que soit l'état de l'inverseur de polarisation 3. La lame quart d'onde dont les lignes neutres sont orientées à 45° des axes de polarisation X et Y, donc suivant les axes x et y, introduit entre les deux ondes un déphasage égal à

$$\frac{\pi}{2}.$$

En admettant que les axes lent et rapide de la lame soient tels que la seconde onde est retardée par rapport à la première, le fonctionnement du dispositif peut être illustré par le diagramme vectoriel de Fresnel de la figure 4. Les deux ondes sont représentées respectivement par les vecteurs en trait plein et en pointillés. Lorsqu'il n'y a pas de rotation, les vecteurs représentatifs d'indice (O) présentent un déphasage fixe de

$$\frac{\pi}{2}.$$

Le détecteur quadratique 10 recueille donc un signal de niveau constant $V_{D0}$ correspondant à la résultante $\overrightarrow{V_0}$. Dans l'état (1) correspondant à un inverseur non excité et lorsque le gyromètre est en rotation, les deux ondes sont déphasées de $+\Delta \Phi$, la première étant déphasée de $+d \Phi$, par rapport à son état (O) et lautre de $-d \Phi$ par rapport à son état (O), ce qui correspond alors à un niveau $V_{D1}$ correspondant à la résultante $\overrightarrow{V_1}$. Inversement lorsque l'inverseur est dans l'état excité la première onde étant retardée de $-d \Phi$ et la seconde avancée de $+d \Phi$, le déphasage entre les deux, $-\Delta \Phi$ conduit à une résultante $\overrightarrow{V_2}$ correspondant à un niveau $V_{D2}$.

Lorsque la vitesse est constante, du seul fait de la commutation obtenue par l'inversion de polarisation, le niveau du signal recueilli par le détecteur varie entre $V_{D1}$ et $V_{D2}$, la différence entre ces deux niveaux étant proportionnelle à la vitesse. Le démodulateur 40 qui démodule ce signal par un signal synchrone du signal de modulation de l'inverseur fournit donc un signal S ($\Omega$) proportionnel à la vitesse de rotation.

L'invention n'est pas limitée au mode de réalisation précisément décrit et représenté. En particulier, il est possible d'associer d'autres moyens de commutation à des moyens de déphasage pourvu que les deux ondes émises alternativement en direction de l'une et de l'autre des extrémités de la fibre enroulée, et déphasées l'une par rapport à l'autre de

$$\frac{\pi}{2}$$

subissent alternativement, au rythme de la commutation une avance et un retard durant leur trajet dans la fibre du fait de la rotation. Par exemple, il est possible d'utiliser à la place de l'inverseur de polarisation à effet électro-optique, un inverseur de polarisation à effet magnéto-optique. Il serait également possible, mais plus difficile, de mettre en oeuvre une commutation de type mécanique.

**Revendications**

1. Gyromètre interférométrique à fibre optique comportant une source laser (1) émettant un rayonnement monochromatique, une fibre optique (6) enroulée en hélice autour de l'axe de rotation du gyromètre, des moyens de séparation et de recombinaison du rayonnement (5) destinés à diriger vers les deux extrémités de la fibre deux ondes circulant dans la fibre en sens contraires et à recombiner les deux ondes émergeant de la fibre, un détecteur des ondes recombinées et des moyens déphaseurs (9) placés sur le trajet du rayonnement entre ledit détecteur et lesdits moyens de séparation et de recombinaison de façon à introduire entre les deux ondes un déphasage fixe égal à

$$\frac{\pi}{2}$$

avant détection, caractérisé en ce qu'il comporte en outre des moyens de commutation (3) commandés par un signal alternatif fourni par un modulateur (4) agissant sur les deux ondes pour inverser alternativement leur sens de parcours de la fibre par rapport au sens de rotation, et un démodulateur synchrone (40) recevant le signal de sortie du détecteur (10) et un signal synchrone du signal de commande applique aux moyens de commutation.

2. Gyromètre selon la revendication 1, caractérisé en ce que les moyens de commutation comportent un inverseur de polarisation (3) associé à deux polariseurs (7, 8) l'inverseur de polarisation transmettant sans modification ou inversant, suivant les deux états du signal alternatif y appliqué, les composantes de polarisation du rayonnement incident orientées suivant des axes X et Y à 45° de l'axe de polarisation du rayonnement incident, les deux polariseurs transmettant respectivement les composantes de polarisation suivant X et Y, aux deux extrémités de la fibre optique enroulée, le gyromètre comportant en outre des moyens de séparation (5) du rayonnement émergeant de l'inverseur pour le diriger par moitié vers les polariseurs (7, 8) et de recombinaison du rayonnement émergeant des polariseurs après circulation dans la fibre pour le transmettre à l'inverseur, des moyens de séparation (2) placés entre la source laser et l'inverseur pour séparer le rayonnement retour du rayonnement aller et une lame quart d'onde (9) déphasant de

$$\frac{\pi}{2}$$

les composantes de polarisation suivant X et Y l'une par rapport à l'autre, le détecteur (10) détectant le rayonnement issu de la lame quart d'onde.

3. Gyromètre selon la revendication 2, caractérisé en ce que l'inverseur de polarisation (3) est un inverseur électro-optique commandé par un champ électrique.

4. Gyromètre selon la revendication 3, caractérisé en ce que l'inverseur électro-optique (3) est un cristal du type KD*P dans lequel l'inversion de polarisation est obtenue par effet Pockels.

5. Gyromètre selon la revendication 2, caractérisé en ce que l'inverseur de polarisation (3) est un inverseur magnéto-optique commandé par un champ magnétique.

6. Gyromètre selon l'une quelconque des revendications 2 à 5, caractérisé en ce que les moyens de séparation et de recombinaison du rayonnement sont des lames partiellement réfléchissantes.

**Claims**

1. Interferometric fiber-optical light guide gyrometer comprising a laser source (1) emitting a monochromatic radiation, a fiber-optical light guide (6) coiled helically around the axis of rotation of the gyrometer, means for separating and recombining the radiation (5), destined to direct to the two ends of the fiber two waves circulating in the fiber in opposite directions and to recombine the two waves emerging from the fiber, a detector for the recombined waves and dephasing means (9) arranged in the path of the radiation between said detector and said means for separating and recombining as to introduce between the two waves a fixed phase shift equal to $\pi/2$ before detection, characterized in that it further comprises interchanging means (3) controlled by an alternating signal provided by a modulator (4) acting on the two waves for inverting alternately their direction of passage through the fiber relative to the direction of rotation and a synchronous demodulator (40) receiving the output signal of the detector (10) and a signal synchronous to the control signal applied to the interchanging means.

2. Gyrometer according to claim 1, characterized in that the interchanging means comprises an inverter of polarization (3) associated with two polarizers (7, 8), the inverter of polarization transmitting without change, or inversing, according to the two states of the alternating signal applied thereto, the components of polarization of the incident radiation oriented according axes X and Y at 45° to the axis of polarization of the incident radiation, the two polarizers transmitting respectively the components of polarization according to X and Y to the two ends of the coiled optical fiber, the gyrometer further comprising means for separation (5) of the radiation emerging from the inverter for directing it half-and-half to the polarizers (7, 8) and for recombination of the radiation emerging from the polarizers after circulation in the fiber for transmitting it to the inverter, means for separation (2) arranged between the laser source and the inverter for separating the return radiation from the go radiation and a quarter-wave plate (9) dephasing by $\pi/2$ the components of polarization according to X and Y relative to each other, the detector (10) detecting the radiation coming out of the quarter-wave plate.

3. Gyrometer according to claim 2, characterized in that the inverter of polarization (3) is an electro-optical inverter which is controlled by an electric field.

4. Gyrometer according to claim 3, characterized in that the electro-optical inverter (3) is a crystal of KD*P type in which the inversion of polarization is achieved by the Pockels effect.

5. Gyrometer according to claim 2, characterized in that the inverter of polarization (3) is an magneto-optical inverter which is controlled by a magnetic field.

6. Gyrometer according to any one of claims 2 to 5, characterized in that the means for separation and for recombination of the radiation are semireflecting plates.

**Patentansprüche**

1. Interferometrisches Lichtleitfaser-Gyrometer mit einer Laserquelle (1), die eine monochromatische Strahlung aussendet, einer Lichtleitfaser (6), die schraubenförmig um die Drehachse des Gyrometers gewickelt ist, einer Einrichtung zum Trennen und Wiedervereinigen der Strahlung (5), die dazu bestimmt ist, auf die beiden Enden der Faser zwei in entgegengesetztem Sinne umlaufende Wellen zu richten und die beiden Wellen beim Austritt aus der Faser wieder zu vereinigen, einer Fühleinrichtung für die wieder vereinigten Wellen und einer Phasenschiebereinrichtung (9), die im Wege zwischen der Fühleinrichtung und der Einrichtung zum Trennen und Wiedervereinigen angeordnet ist, derart, daß sie zwischen den beiden Wellen eine feste Phasenverschiebung von $\pi/2$ vor dem Fülen einführt, dadurch gekennzeichnet, daß sie ferner eine Vertauschungseinrichtung (3), die durch ein Wechselsignal gesteuert wird, das durch einen Modulator (4) geliefert wird, der auf die beiden Wellen einwirkt, um abwechselnd ihre Durchlaufrichtung durch die Faser in Bezug auf die Drehrichtung umzukehren, und einen synchronen Demodulator (40), der das Ausgangssignal der Fühleinrichtung (10) und ein zum an die Vertauschungseinrichtung angelegten Steuersignal synchrones Signal empfängt, aufweist.

2. Gyrometer nach Anspruch 1, dadurch gekennzeichnet, daß die Vertauschungeinrichtung einen mit zwei Polarisatoren (7, 8) verbundenen Polarisationsumkehrer (3) aufweist, wobei der Polarisationsumkehrer je nach den beiden Zuständen des daran angelegten Wechselsignals die Polarisationskomponenten der einfallenden Strahlung, die nach Achsen X und Y unter 45° zur Polarisationsachse der einfallenden Strahlung gerichtet sind, ohne Änderung durchläßt oder umkehrt, wobei die beiden Polarisatoren jeweils die Komponenten der Polarisation nach X bzw. Y an die zwei Enden der gewickelten Lichtleitfaser durchlassen, wobei das Gyrometer ferner eine Einrichtung zum Trennen (5) für die aus dem, Umkehrer austretende Strahlung, um sie hälftig auf die Polarisatoren (7, 8) zu richten, und zum Wiedervereinigen der aus den Polarisatoren nach dem Umlauf in der Faser austretenden Strahlung, um sie zum Umkehrer durchzulassen, eine Einrichtung zum Trennen (2), die zwischen der Laserquelle und dem Umkehrer angeordnet ist, um die Rückstrahlung von der Hinstrahlung zu trennen, und ein Viertelwellenplättchen (9), das die Komponenten der Polarisation nach X und Y im Verhältnis zueinander um $\pi/2$ phasenverschiebt, wobei die Fühleinrichtung (10) die von dem Viertelwellenplättchen ausgehende Strahlung fühlt, aufweist.

3. Gyrometer nach Anspruch 2, dadurch gekennzeichnet, daß der Polarisationsumkehrer (3) ein durch ein elektrisches Feld gesteuerter elektro-optischer Umkehrer ist.

4. Gyrometer nach Anspruch 3, dadurch gekennzeichnet, daß der elektro-optische Umkehrer (3) ein Kristall vom Typ KD*P ist, in dem die Umkehrung der Polarisation durch den Pockelseffekt erzielt wird.

5. Gyrometer nach Anspruch 2, dadurch gekennzeichnet, daß der Polarisationsumkehrer (3) ein magneto-optischer Umkehrer ist, der durch ein magnetisches Feld gesteuert wird.

6. Gyrometer nach einem der Ansprüche 2 bis 5, dadurch gekennzeichnet, daß die Einrichtungen zum Trennen und Wiedervereinigen teilreflektierende Platten sind.

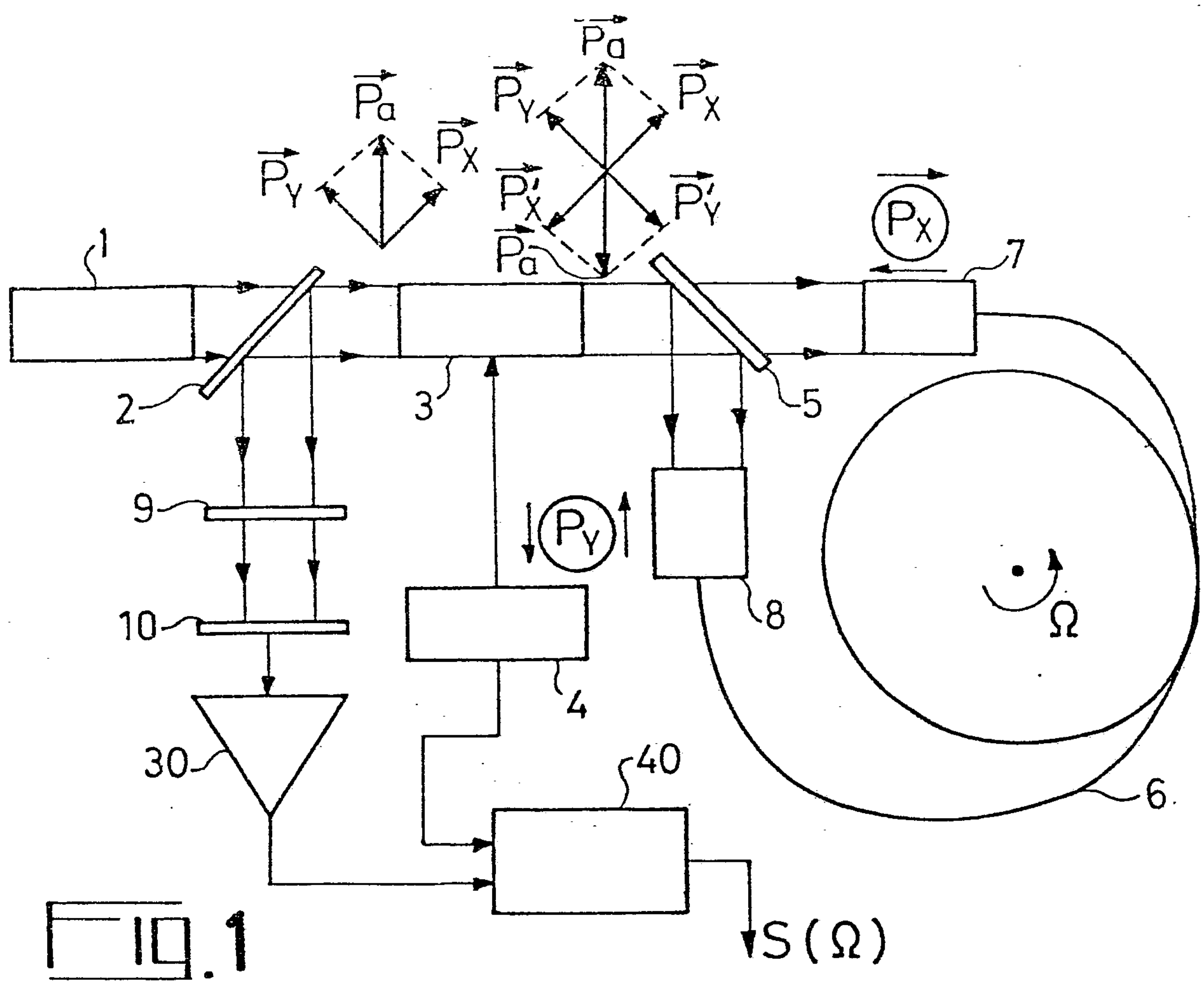

$\vec{P_a}$
$\vec{P_Y}$
$\vec{P_X}$
$\vec{P'_X}$
$\vec{P'_Y}$
$\vec{P_a}$
$\vec{P_X}$
$\vec{P_Y}$
1
2
3
4
5
6
7
8
9
10
30
40
Ω
S(Ω)


Fig. 1

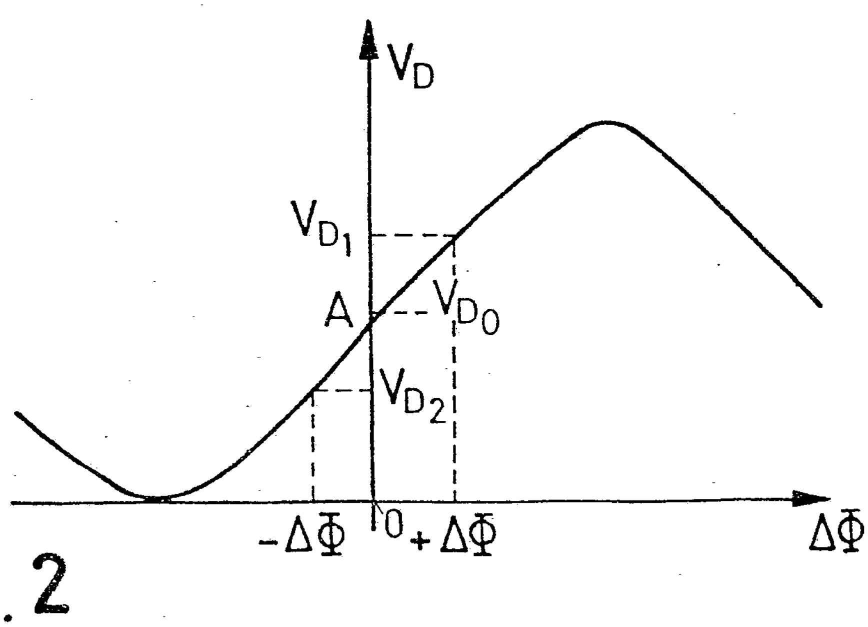

$V_D$
$V_{D_1}$
A
$V_{D_0}$
$V_{D_2}$
$-\Delta\Phi$
0
$+\Delta\Phi$
$\Delta\Phi$


Fig. 2

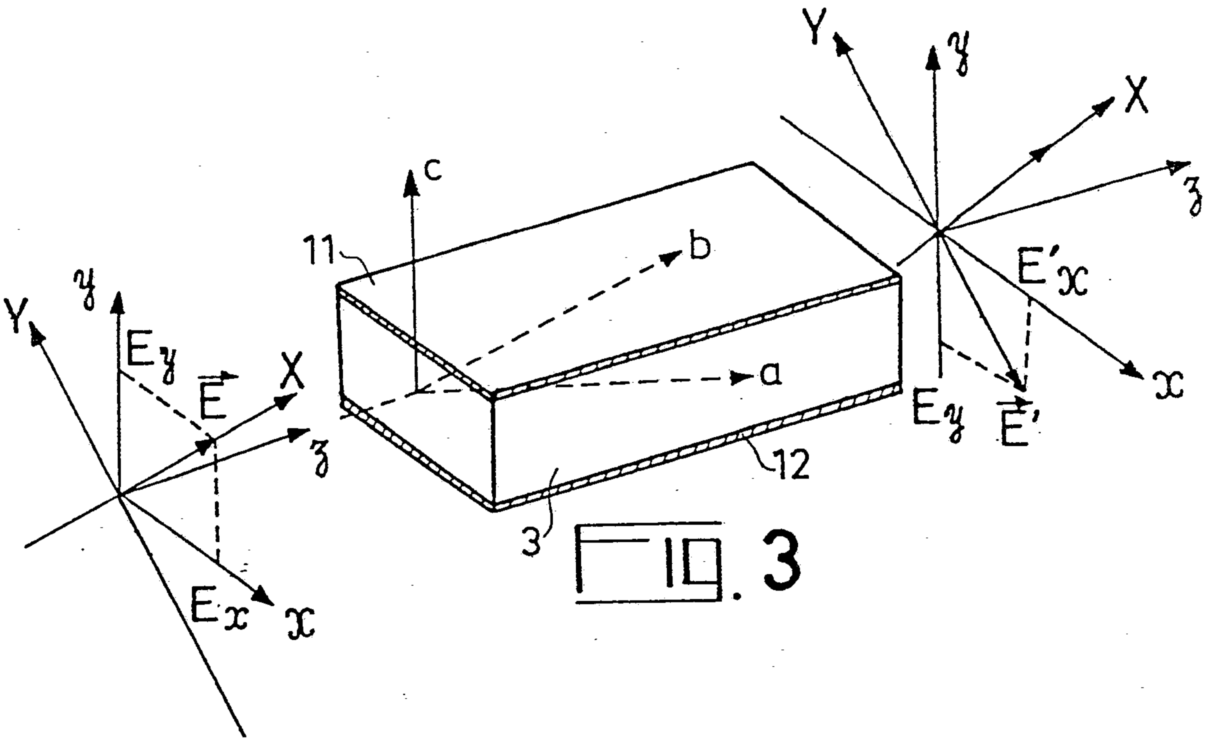


Fig. 3

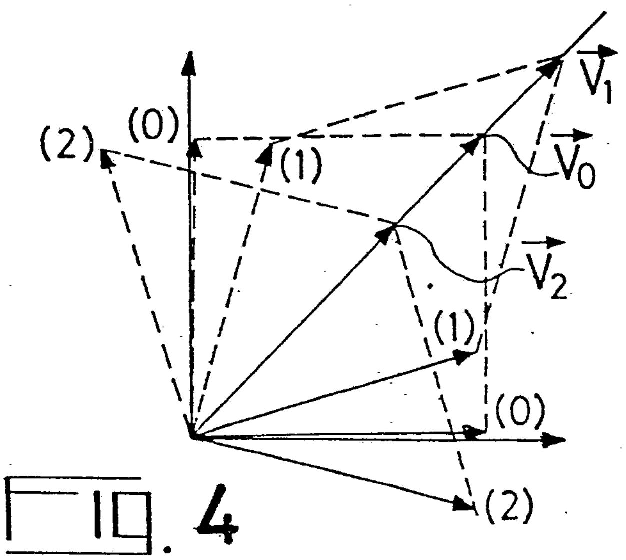


Fig. 4